# EUROPEAN PATENT SPECIFICATION

(11) **EP 3 858 062 B1**
(45) Date of publication and mention of the grant of the patent: **25.12.2024**
(21) Application number: 19772768.8
(22) Date of filing: 25.09.2019
(51) Int. Cl.: H04W 72/23

(54) **METHOD AND SYSTEM FOR SHARING / MANAGING RESOURCES**
VERFAHREN UND SYSTEM ZUM TEILEN/VERWALTEN VON RESSOURCEN
PROCÉDÉ ET SYSTÈME POUR PARTAGER/GÉRER DES RESSOURCES

(30) Priority: 26.09.2018 EP 18197004
(43) Date of publication of application: 04.08.2021
(73) Proprietor: Fraunhofer-Gesellschaft zur Förderung der angewandten Forschung e.V., 80686 München (DE)
(72) Inventor: HASSAN HUSSEIN, Khaled Shawky, 91058 Erlangen (DE); ROTH-MANDUTZ, Elke, 91058 Erlangen (DE); AHMED ABDOU MOHAMED, Amany Abdelkader, 91058 Erlangen (DE); NIEMANN, Bernhard, 91058 Erlangen (DE)
(74) Representative: Pfitzner, Hannes
(86) International application number: PCT/EP2019/075934
(87) International publication number: WO 2020/064874

(56) References cited:
- EP-A1- 3 169 094
- KYOCERA: "Consideration of Inter-cell D2D Service", vol. RAN WG2, no. Valencia, Spain; 20140331 - 20140404, 22 March 2014 (2014-03-22), XP050817813, Retrieved from the Internet <URL:http://www.3gpp.org/ftp/tsg_ran/WG2_RL2/TSGR2_85bis/Docs/> [retrieved on 20140322]
- KYOCERA: "PDCP and RLC functionalities for D2D", vol. RAN WG2, no. Dresden, Germany; 20140817 - 20140822, 17 August 2014 (2014-08-17), XP050794702, Retrieved from the Internet <URL:http://www.3gpp.org/ftp/Meetings_3GPP_SYNC/RAN2/Docs/> [retrieved on 20140817]
- CATT: "Resource coordination in partial network coverage scenario", vol. RAN WG1, no. Prague, Czech Republic; 20140210 - 20140214, 9 February 2014 (2014-02-09), XP050735669, Retrieved from the Internet <URL:http://www.3gpp.org/ftp/Meetings_3GPP_SYNC/RAN/RAN1/Docs/> [retrieved on 20140209]
- SONY: "Evaluation of sidelink enhancements for scenario 1", vol. RAN WG1, no. Prague, Czech; 20170821 - 20170825, 20 August 2017 (2017-08-20), XP051317364, Retrieved from the Internet <URL:http://www.3gpp.org/ftp/Meetings_3GPP_SYNC/RAN1/Docs/> [retrieved on 20170820]

## Description

Embodiments of the present invention refer to a method for managing, e.g. sharing resources and to a corresponding communication system. Further embodiments refer to a first mobile transceiver belonging to a communication system, wherein the first mobile transceiver is configured to offering an portion of its resources to be shared/offered/granted. Further embodiments refer to a second mobile transceiver belonging to a communication system, wherein the second mobile transceiver is configured to request resources. A further embodiment refers to a user equipment or a vehicle comprising one of the mobile transceivers.

A mobile communication system typically comprises a transceiver, e.g. a transceiver of the base station, and a plurality of mobile transceivers, e.g. of e UE or of a vehicle. The different mobile transceivers typically require at different point of times a different amount of resources. According to common communication systems, there are two widespread resource allocation modes:
- centralized resource allocation - controlled by the basis station - referred to Mode 3 in LTE;
- distributed resource allocation - here, the resources are allocated by any user equipment V2X services - this mode is referred to Mode 4 in LTE.

Both resource allocation modes do not enable to take into account the current requirements for resources of the different mobile transceivers. Therefore, there is a need for an improved approach enabling a resource redistribution.

It is an objective of the present invention to provide a concept enabling resource managing like resource redistribution, especially for V2X resource allocation networks.

This problem is solved by the subject matter of the independent claims. The invention is defined by independent claims. Embodiments are defined by the dependent claims.

invention will subsequently be discussed referring to the enclosed Figures, wherein
- Figs. 1a and 1b: show schematic presentations of a donor and a taker transceiver including the exchanged information in two different operation modes according to different embodiments;
- Fig. 2a: shows a schematic representation illustrating the sharing request and virtual granting response according to a further embodiment;
- Fig. 2b: schematically illustrates the communication range and interference range of grant request (borrowing) message to illustrate further embodiments. Note, inside each circle, the multicast/unicast of the granting request is depicted;
- Fig. 3: schematically illustrates selecting the transmission power of the granting request message exceeding a threshold to illustrate a further embodiment. Note, if not, the received power will go to be detected by the donor user equipment;
- Fig. 4: schematically illustrates the toggling mechanism and granting request technique according to further embodiments;
- Fig. 5a: shows a schematic flow chart of the donor user process in resource sharing according to an embodiment;
- Fig. 5b: shows a schematic flow chart of the taker operation including requesting an access shared resources according to a further embodiment; and
- Fig. 6: illustrates schematically power levels for sharing and exchanging messages to discuss a further embodiments:

Below, embodiments of the present invention will subsequently be discussed referring to the enclosed Figures. Here, identical reference numbers are provided to objects having similar or identical function, so that the description thereof is mutually applicable and interchangeable.

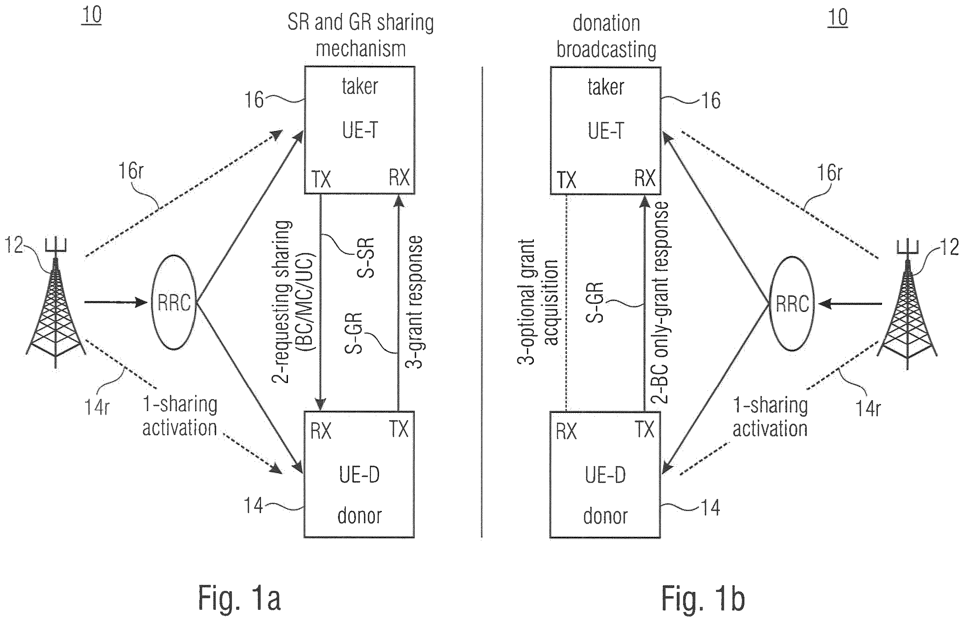

Fig. 1a shows a first mobile communication system 10 having a transceiver 12, a first mobile transceiver 14, also referred to as UE-D or donor and a second mobile transceiver 16, also referred to as UE-T or taker. Both mobile transceivers 14 and 16 can have an active communication with the base station so as to exchange data and/or control information. This communication link is marked by the reference numerals 14R and 16R. In order to enable the communications 14R and 16R, first resources 14R are allocated to the first mobile transceiver 14, while second resources 16R are allocated to the second mobile transceiver 16. Note the first and second resources can be resources to be used for the communication between the base station 12 and the respective UE /transceiver 14 and 16. Alternatively, the first and second resources can be used for enabling a direct communication between the UEs 14 and 16 (e.g. pre-configured resources or in general sidelink resources).

It should be noted that the communication system 10 can be a cellular communication system enabling data exchange between the base station 12 and V2X/D2D sidelink users. Here, a centralized resource allocation mode (Mode 3 - like) and distributed resource allocation mode (Mode 4 - like) users for V2X and D2X can be performed, such that V2X and D2X can use sidelinks (both directions). These modes are referred to as Mode-1 and Mode-2 in D2D sidelinks. Note, between the same mode users with different QoS constraints the sharing of preconfigured resources is possible. In the current 3GPP specification, resource pool sharing is proposed with sensing and reporting mechanisms. Sensing itself consumes a complete period of 1000 ms, which will induce a long latency. The reporting maybe carried to the base-station via CBR messages only and this might not be enough.

Below, an improved approach for resource sharing will be discussed with respect to Fig. 1a. The situation is, that the mobile transceiver 14 has allocated, but not completely used resources 14R. The portion of the first resources 14R to be shared can be shared. The second mobile transceiver 16 has also allocated second resources 16R, but requires more. In order to enable the resource sharing between the transceivers 14 and 16, the transceiver 16 can send a request S-SR (sidelink scheduling request). This request is preferably sent directed from the transceiver 16 to the transceiver 14, as illustrated by the communication channel marked by S-SR. As response to S-SR, the transceiver 14 can grant the request using a sidelink grant response S-GR which is transmitted to the transceiver 16. Of course, the donor 14 may also reject the request using S-GR. The grant of the resources S-GR enables the taker 16 to use the allocated, but portion of the resources 14R to be shared/offered/granted. Note, the portion of the (first) resources to be shared/offered/granted may also be resources used for the direct communication (in cases the group of UEs 14, 16 is in or out of coverage of the BS 12). For example the taker user 16 sends the request to one or multiple user equipment in a proximity. Note, if the message is not decodable by the donor 16, then the request can be neglected. This principle of RRC (radio resource controlling) is initiated by the taker transceiver 16. The mode is referred to as taker user equipment (UE-T or taker).

According to embodiments, this mode may have the following substeps. Sharing intentions from taker-users UE are conveyed (with different steps) to one or more donor-users UEs. Taker-users UEs first start discovery and identify nearby users and, if possible, traffic utilization. Thereafter, taker UEs start announcing some donor-users UEs whose resources are the most promising (has less interference). In this case, if the nearby UEs have high traffic utilization, then taker UEs send the requesting token with a certain power values reaching out farer UEs, i.e., in order to reduce interference if donor continues to use the resources or subset of the resources. The sharing requests shall be a unicast or multicast or broadcast message depending on the scenario.

With respect to Fig. 1b, another mode, also referred to as donor user equipment (UE-D or donor), will be discussed. The embodiment of Fig. 1b starts from the same configuration of the communication network 10 having a transceiver 12, the donor user 14 and the taker user 16. Here, the sharing activation is initiated by the donor user 14 having allocated, but portion of the resources 14R to be shared. For this, the donor transceiver 14 transmits (using a side channel) a grant message S-GR for offering the portion to the taker 16. As response to the offering, the taker 16 can directly use the resources or optionally answer so that a grant acquisition can be performed.

Both embodiments have in common that between the donor transceiver 14 and the taker transceiver 16, the granting request S-SR and the granting response S-GR are exchanged on additional resource requesting sidelinks in order to enhance sharing resources among the different users 14 and 16 with the different QoS flow requirements.

As illustrated by the embodiment of Fig. 1b, the donor UE starts announcing their unused resources for sharing. Here, the donor UE 14 broadcasts their unwanted resource configurations (time and frequency). This message is eventually sent on the next preconfigured (unwanted) grants on the shared resources. The donor UE 14 may, for example, be requested to update the gNB (base station) of the shared resources or the amount of the shared resources or the amount of the offered resources as response to the offer.

From the point of view of the donor user 16, the resource sharing of an embodiment of Fig. 1a and 1b may be described as follows. The UE-D shall
- either receive Sidelink scheduling requests (S-SR) and/or transmit a sidelink grant response (S-GR) with either rejection or announced resources. In an embodiment, the UE-D shall transmit the S-GR as an answer to a specific S-SR.
- or in another embodiment, the UE-D shall transmit a S-GR as a broadcast/multicast message announcing the shared periods and resources to any UE (broadcast) or specific UEs (multicast/groupcast).

Thus, both modes enable to satisfy the urgent demands of a user equipment, e.g. assume distributed MAC operation which wants to share resources from another user, e.g. Mode 3, wherein it should be noted that both user equipments, either taker or donor, can operate with distributed MAC resource allocation, i.e. as in Mode 4 LTE or Mode 4-like NR operation, or can both operate with centralized MAC mechanism, i.e. as in Mode 3 LTE or Mode 4-like NR. Note, sharing can be granted as one-shot or multiple grants with and without a period.

According to further embodiments, the donor UEs performs a prioritization selection algorithm and granting sharing resources for selected taker-user UEs via side link control information on dedicated resources for virtual granting, preconfigured data exchange resource pool, and/or exceptional/additional resource pool like or a common bandwidth part.

As discussed above, preferably, the resource controlling information is changed using sidelinks. According to embodiments, Sharing information can be done also via Exceptional resource pool is involved in this idea, this could be as well: additional exceptional pool, extra reserved resource pool for real-time and critical messaging, and/or emergency exceptional resource pool. Yet taker-user shares information not only sent via SCI (as in the classical Rel 15 SCI extended with the sharing bits) sent over the defined pools but rather via shared resource pool (in this case it is Exceptional RP or other future ones). The main functionality of this resource pool is to be observed by intended sharing users, e.g., taker and donor-users.

Referring to Fig. 1a and 1b, it should be noted that according to further embodiments, further UEs may be present in the communication system 10 which want to participate the resource sharing. All users may be split into two modes based on their packet QoS requirements (i.e. reliability and latency) and their actual service QoS (e.g. represented 5GQ). Consequently, all UEs can serve the purpose as taker UE or donor UE.

According to embodiments, Quality of service satisfaction is carried on different levels; quality of services may be referred to as 5G quality-of-services indicator (5QI). This could be:
- Requesting sharing user will be only supposed to share resources once its packet QoS constraint (i.e., 5QI: 5G QoS identifier) is higher than a selected QoS value QoS_sharing_request_level (i.e., may be mapped or PPPP, PPPR, and/or f(PPPP, PPPR). The QoS may be individual for packets/applications or users.
- Donating users may evaluate the requests and grants only if QoS_requesting » QoS_donated_packets. The taker UEs in-tern send the 5QI value in the sharing request, the UE-ID, and the BSR (if possible).
- Rejecting sharing is based on the decision that QoS_requesting « QoS_donated_packets

The users who donate their resources (i.e., who are able to send grant responses) execute different algorithms to grant some resources and refuse others. If sharing is accepted based on this algorithm, the donating users are supposed to send granting token on the shared announcements resources/pools (as stated before). The grant response are transmitted with the power class of the intended users. Hence, a broadcast message may apply and simple granting key maybe specified. The key maybe decodable by every user.

Note a sidelink sharing request (S-SR) is also defined as Request to Send (RTS), while a sidelink grant response is also known as Clear to Send (CTS).

According to further embodiments, the granting policy may be designed as follows.
- Sidelink UEs with different modes (distributed and centralized resource allocation)
- Sidelink UEs within the same mode (mainly centralized) where some UEs are utilizing many pre-configured resources which can be shared with other UEs.
- Cellular UE being preconfigured to resources and UE sidelinks sharing:
   ∘ Licensed band below 6 GHz
   ∘ Licensed band above 6 GHz
- The granted resources maybe:
   ∘ 1 subframe/slot ready for only one-shot transmission
   ∘ Multiple subframes/slots ready for multiple one-shot transmissions
   ∘ Reservation period of multiple resource for SPS and/or preconfigured periodic transmission.

If the message is xored with the granting request message ID, the UE tries to decode the message first without xoring, if decodable reservation (if granted) is performed. If the message is not decodable, the UE repeats the message decoding after xoring with the message ID field. The message ID can be expanded (by repeating) to cover multiple fields in the granting message.

If the message is un-encrypted, another one or more UEs may capture the SCI information in the virtual grant-request message. Any of these UEs shall tune to transmit (contenting) on the evacuated (granted) resources.

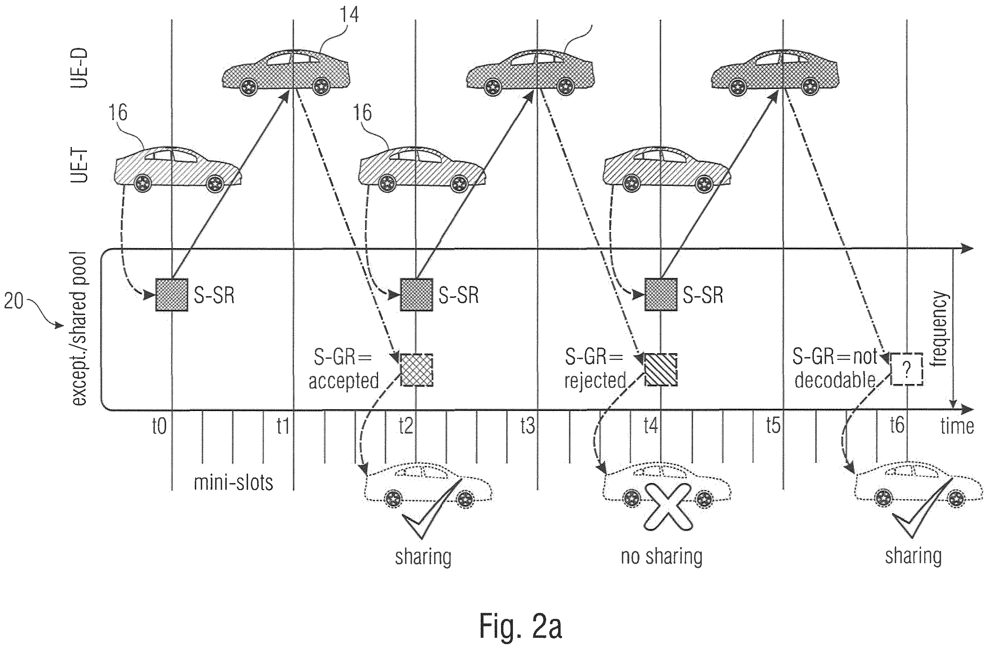

With respect to Fig. 2a, different situations of sharing requests and granting requests will be discussed. Fig. 2a illustrates for different point of times t0 to t6 the communication between the taker UE 16 (UE-T) and the donor UE 14 (UE-D). In the point of time t0, UE-T 16 sends the request S-SR using the exceptional/sharing pool 20 having a dedicated frequency range. As response, the UE-D 14 receiving the request S-SR accepts same and sends a grant message S-GR which can be received by UE-T 16 at t2. Here, the request S-SR and the grant S-GR may be send using different frequencies within the frequency band of the sharing pool 20.

Thus, a sharing request is seemed to be sent over the air (OTA) on sharing/exceptional pool or a predefined set of resources. Although, it is not explicitly shown, the sharing message sent on, e.g. at t0, can be received by one or more user equipments, e.g. at t1. As illustrated by S_GR equal to rejected transmitted at t4 as response to the request at t2/t3, the UE-D 16 can also reject the resource sharing. If the received message allows sharing, the resources to be granted to the taker UE 14 (i.e. mode for UEs) can, according to embodiments be included within the response.

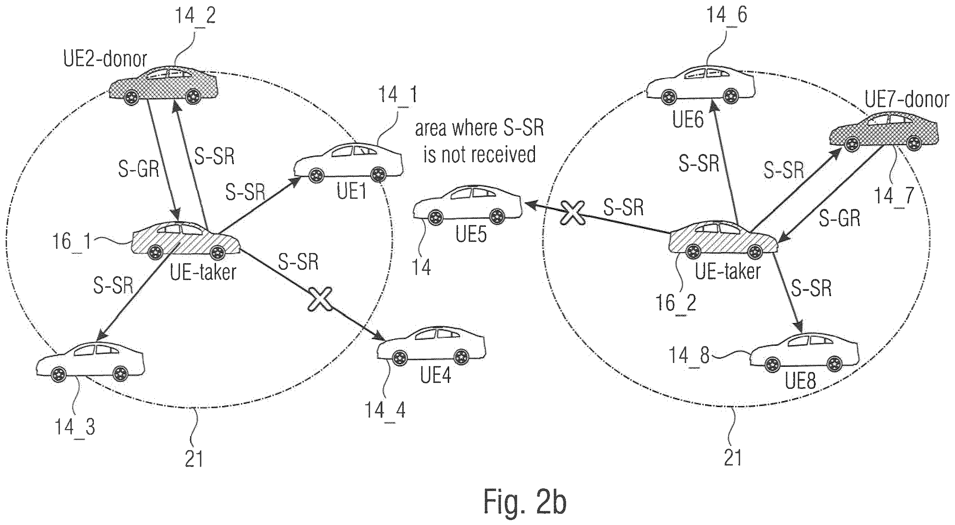

The transmit power for the request S-SR and eventually for S-GR, may have a limited transmit power. Limiting the transmit power enables to define the communication range and ensure not to cause interference range out of the defined range. Fig. 2b illustrates the communication ranges of two taker UEs 16_1 and 16_2 by two cycles around the taker UEs 16_1 and 16_2 together with a plurality of potential donor UEs 14_1 to 14_8. Around each taker UE 16_1 and 16_2 two circles 21 are illustrates representing the limited transmit power. Inside each circle 21, the multicast/unicast of the S-GR is depicted. In detail, S-SR of UE 16_1 can be received by the potential donor UEs 14_1 to 14_3, but not by UE 14_4 to 14_8. Vice versa, S-SR of 16_2 can be just received by the potential donor UEs 14_6, 14_7 and 14_8. The UEs 14_4 and 14_5 do not receive any S-SR.

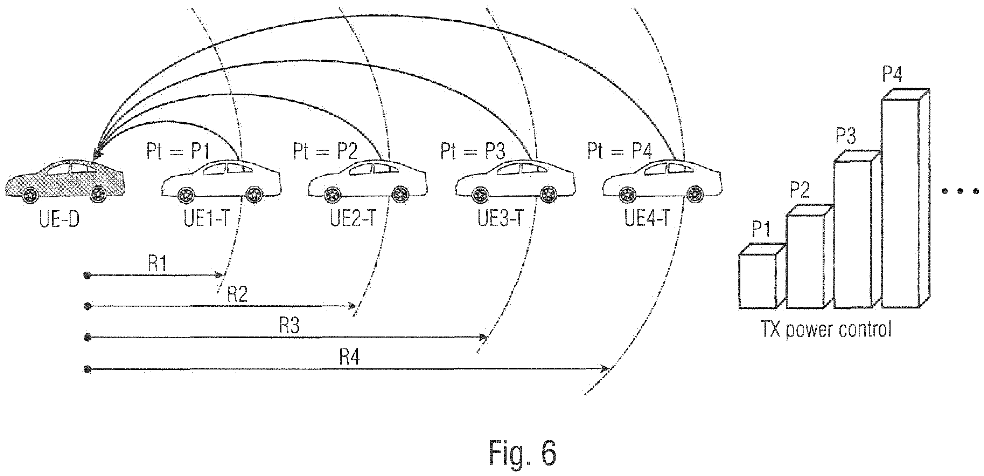

The UEs requesting resources shall proceed with the discovery mechanism to select the proximity UEs, i.e., if the UEs requires doing multicast or unicast of their scheduling messages. All those UEs are assumed to be active UEs, even if they are RRC idle or not connected. If the discovery mechanism results in multiple tiers of UEs surrounding the taker-user UE and, if necessarily, one or more requests shall be sent with dominant (maximum) reachability power (see Fig 6 for more details). Any other UE is not targeted by the communication range are receiving the resource scheduling request (borrow) message in their interference range, i.e., with very weak power signal. Hence, The power selection has to be done accurately to avoid multiple reservation.

According to embodiments, threshold to decide whether the donor would coexist with the taker on the donated resources or not: The received scheduling request message at the donor UEs shall be compared to a defined threshold (Thr). The reason here is to encourage the donor UE to accept the grant-request message coming more from a relatively far UE. In this case, the donor UE may decide to use the donated resources, as the taker UEs are located far from their possible communication range, i.e., the sharing power should be limited in this case to avoid interference.

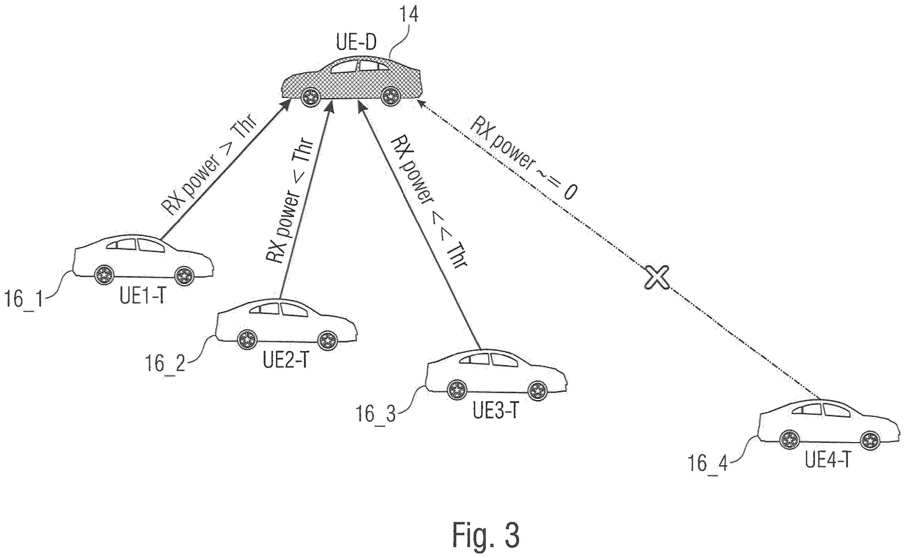

Fig. 3 illustrates how the grant requesting UEs 16_1 to 16_4 should, according to embodiments, select the power based on the discovered position of the potential donor UE 14. If the discovery did not result in an information, the grant-requesting UE select high power ranges for better reachability. With respect to Fig. 3, it becomes clear that the selecting of a transmit power of the GR message must exceed a certain threshold (cf. UE 16_1 and UE 16_2, but not UE 16_3 and the not received request of UE 16_4). If, not, the received power will be too low to be dedicated by the donor UE 14.

Preferably, granting or offering the portion is performed, if the power level is within a predefined range of thresholds if is sharing is required: For example, UE2-T may have an RX power level within this range (above RX power of UE1-T (high power indicating too near) and below UE3-T (low power level). Further, granting or offering the portion is performed, if the power level is below a second threshold (« Thr ) if is sharing is not required. This may be valid for UE3-T. Consequently, the second threshold may smaller than the thresholds of range or may be defined by the low power level threshold of the range.

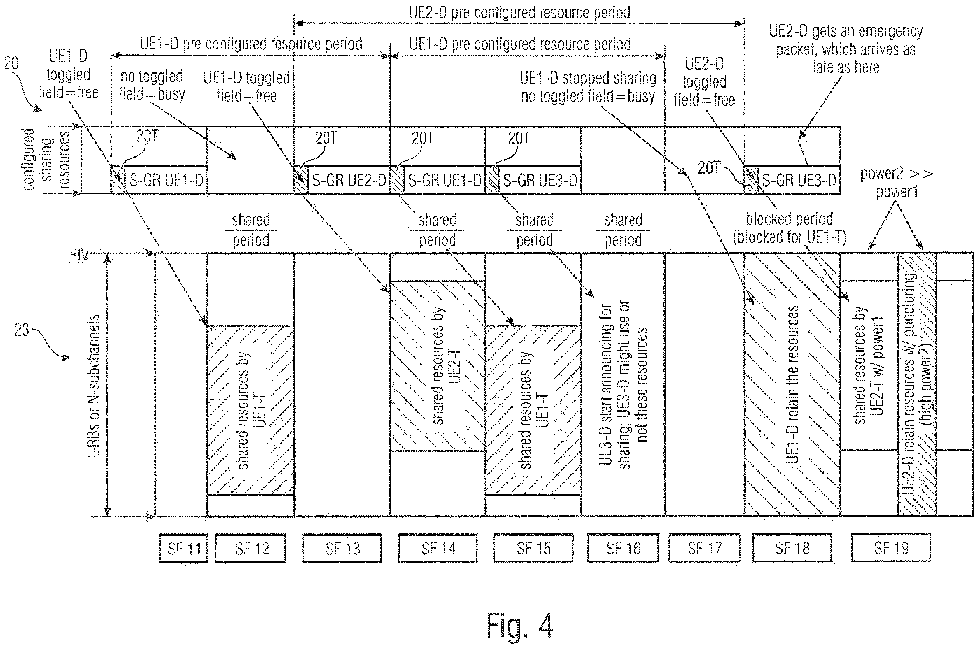

Below, an embodiment which is mainly based on the embodiment of Fig. 1b will be discussed, wherein further details, especially regarding the spontaneous sharing and regarding an optional step of toggling will be discussed. The discussion is made with respect to Fig. 4.

Fig. 4 shows resources for exchanging resource controlling information which are marked by the reference numeral 20 and the resources to be shared/offered granted which are marked by the reference numeral 23. As illustrated, the resource sharing is performed with regard to the time frames SF 11 to SF 19 and also with regard to different sub-channels belonging to the time frames, as can be seen with respect to SF 15 or SF 14. The resource controlling information are exchanged within the resources 20, wherein a so called toggle is used. The toggle can indicate that resources are free, wherein a no toggled field enables to retain the resources. The toggled fields are marked by the reference numeral 20T.

In the illustrated sharing activities, the donor UE starts to offer its resources for sharing using a sidelink grant response (S-GR) messages without receiving S-SR. In this case, a mode is introduced in the sharing activation message sent by the network to allow spontaneous sharing.

The S-GR is a control message (or shared data channel with controlled multiplexed within data), which may contain:
- Selected resource pool or pre-configuration
- RIV (redundancy Increment version) position
- The maximum number of the subchannels (N subchannels or L-PRBs)
- Toggling field to indicate whether the shared resources are still available in the next slot or not.

Toggling is seen as a signal to indicate whether the donor allows sharing on its resources in the next slot or not. In case toggling filed = is short indication flag (allow or do-not-allow).

The toggling may, for example, be executed as following:
- S-GR (or clear to send (CTS)) is transmitted on the preconfigured /shared/ exceptional resources. This can also be an LTE granted band of mode 3 or mode 4. This can also be a common bandwidth part for exchanging sharing messages, e.g., request to send (RTS, a.k.a. S-SR), or clear to send (CTS, a.k.a. S-GR):
   ∘ When it is a preconfigured exceptional resources parallel to the offered resources, the S-GR may point to the sub-frame (or slot) on a later subframe (or slot).
   ∘ If the shared resource for S-GR transmission present in an LTE resource pool, hence one or more subframes (collective subframes) may be pointed in the S-GR arriving in advance to shared resources.
   ∘ If dynamic activation and deactivation toggling control is not supported, the S-GR may consume the total subframe or slot.
   ∘ For LTE shared resources, toggling control shall not be supported if the sub-frames for NR V2X and LTE shared control resources are not aligned
- If Toggling is supported (for dynamic activation and deactivation of UE-D), the toggling control field may consume a sub-slot based (mini-slot duration) before the starting of the S-GR subframe. Hence, the S-GR subframe should use partially the following subframe (i.e., allow toggling field for the next period to be transmitted at the end of the S-GR).
   ∘ Hence, if a UE received an internal message with a high priority, i.e., higher than the taker UE packets, the UE should send a busy toggling value on the mini-slot (as UE1-D did in subframe 17 to forbidden sharing on subframe 18).
   ∘ If the UE already sent the activating toggling message, the UE can schedule his urgent transmission to another time-slot. If the sidelink sharing (puncturing is supported:
- If a donor UE missed the deactivating toggling transmission chance, and if its data has a very high propriety, the UE may puncture one or more mini-slot to transmit its own data values.
   ∘ Puncturing can be done by increasing the power of the donor UE urgent transmission.
   ∘ Hence, select for the puncturing the increased power for mini.slots is power-2
   ∘ It is assumed that the taker UEs will not transmit with a power higher than power -1
   ∘ Thus, power2 » power1 (as in UE2-T and UE2-D do in subframe 19).

According to a further embodiment, a puncturing mechanism can be used. According to this, the donor UEs have a period to donate partially or fully. The taker UEs react passively, i.e. the UE-T scans the shared resource pool for sharing. If the pool indicate the current S-GR subframe, the taker UE may only be able to capture the frames in the next transmission opportunity (as in SF 16, where UE3-D is announcing sharing). This embodiment can be summed up as following: The toggling mechanism allows signaling (e.g. using layer 1 SCI) to activate and deactivate sharing on one or more multiple transmit occasions.

According to a further embodiment, the virtually granted resources by the donor UEs may be fed back to the Base-station for further analysis. The granted resources amount or ratios are sent to the base-station to give it an indication of the sharing traffic. The base-station may receive this reporting during one of the measurement reports on the UL. Successful sharing percentage may be sent as an index quantized into 3 bits (i.e., 8 levels) indicating the successful sharing percentage quantization bits.

| Bit-field | Percentage |
|---|---|
| 000 | 0% |
| 001 | 12,5% |
| 010: | 25% |
| ... | ... |
| 111 | 100% |

This feedback information can be utilized to offload the pre-configuration to the requesting modes/UEs if possible. If not, the base-station may figure out supplementary resources for the donor UEs on same or higher frequencies.

According to a further embodiment, matching users of the Modes and the QoS information is used for selecting granted resources or, in general for the resource sharing algorithm. In the following, we describe the operation of both D-UE and UE-T in V2X. Let us assume now that the UE-D is a Mode 3-like UE and the taker-user is a Mode 4-like UE, i.e., one for a network assisted resource allocation and the other for autonomous (distributed) resource allocation modes, respectively. In mode 3-like operation, the base-station configures grants for one shot transmission and pre-configures grants for grant-free access transmission (as of Rel 15 NR). In both cases, it is assumed that if a network coverage exists (via one or more base-stations), it preconfigures certain resources to handle (exchange) grant proposals from one mode and carries the returned back scheduling grants. The UE of the higher 5QI value mode is able to grant one or more UEs at a time on one or more of its costumed (preconfigured or granted) resources.

Let us assume that Mode 3 or Mode 3-like users are the users who have preconfigured or granted resources to be used mainly for a semi-persistent scheduling. Other resources can be based on one-shot resources appearing in later sub-frames (if possible according to new-radio definitions, resources can be configured in advance).

In our context: Mode 3 UE refers to: any UE of a higher priority UEs, sidelink UE with mode 3 configuration, and/or UEs with mode-3-like operation for NR design utilizing RRC connection/network connection with network-based scheduling. Mode 3 can also note as mode 1 (for sidelink non-V2X UEs).

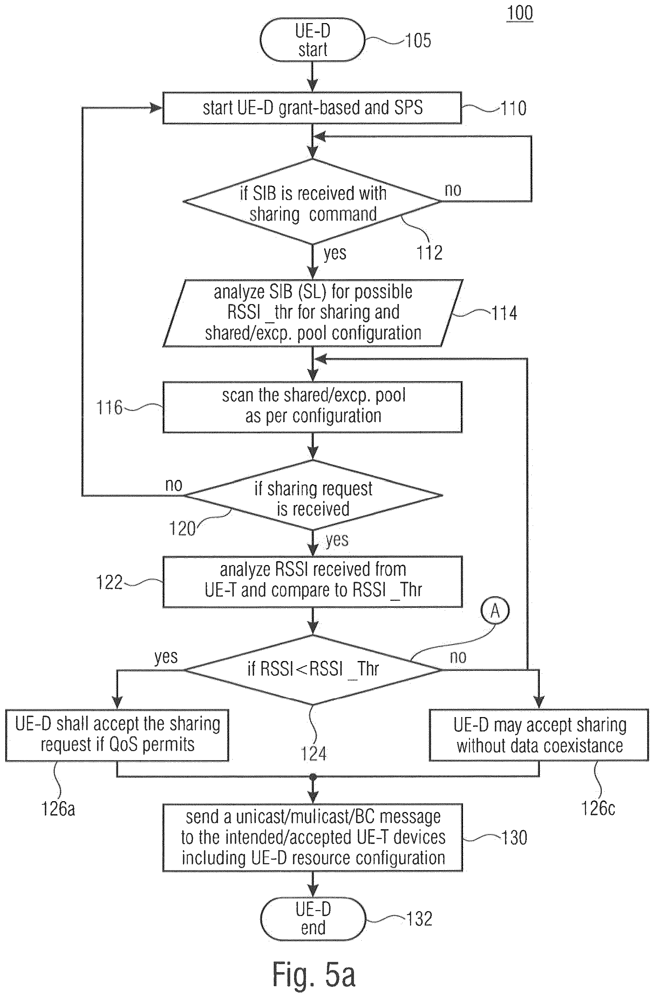

According to a further embodiment, the QoS flow aware selection and matching mechanism may be implemented as following. This implementation will be discussed with respect to Fig. 5a

Fig. 5a shows a donor user process 100 for resource sharing. Here, the donor UE (UE-D) initiates the method, as illustrated by the method step 105. The first step is 110 of starting UE-D grant-based on SPS. Here, a UE-D acquires the SPS, preconfigured resources or random grants (one shot transmission); the donor UE UEs might not need to consume all possible resources. Additionally, the donor UE might not be transmitting high reliability and/or low-latency data. This step 110 can have three optional substeps 112, 114, and 116. Within the step 112 is checked, the SIB is received within the sharing command. If the donor UE receives SIB command (this could be, e.g., in LTE SIB 18, 19, 21 for sidelink in LTE, for new radio, this might be different) with sharing activation the following apply:
∘ The donor UE identifies the sharing command for possible RSSI threshold to response (cf. step 114)
∘ The donor UE identifies the sharing command PPPP/PPPR/QoS-flow level to assess the decision of sharing and priorities
∘ The donor UE identifies in the sharing signaling the shared preconfigured resources size (in frequency and time), staring index, and it periodicity. The preconfigured resources could be also a preconfigured pool only used for emergency cases. It could be also the "exceptional pool" or one of the "exceptional pools" handling the problem as a RLF (radio link failure) or a congestion resolution.

Regarding step 116: Once the mode-3 UE identifies the shared resources (pool) it start scanning it for possible grant requests from a lower priority UEs (could be taker UE or taker UE like UE or congested donor UE or congested donor UE like UE).

If sharing is received (cf. step 100), the donor UE analyze the request and identifies if they should accept the sharing requests or reject it for the time being. If the UE accept the sharing and if the RSSI received is less than a threshold (predefined), the low priority UEs are allowed to coexist.

If the RSSI is high, (cf. step 122 and 124), and the donor UE is owning a redundant resources, then it decides to share without coexistence (the UE donor UE decides to forbid transmission on shared resources).

Once, the donor UE is accepting the sharing (cf. step 126a or 126c), the donor UE UE sends sharing acceptance short data with short P(U/S)CCH (or long if not possible) containing the resource allocation that has be accepted to be shared. The donor UE UEs only send the time offset, starting PRB and the length of PRBs. If the UE will grant a complete SPS or preconfigured period, the period has to be added as well.

As indicated by step 130, the message is sent as a unicast (for a single UE), multi-case (for multiple granted UEs), or broadcast if unicast and multicast are not possible. The step 130 is the last step of the method 100 as indicated by the end point 132.

Regarding the method 100 it should be noted that there are some optional steps, like 112, 114, 116, 122, and 124.

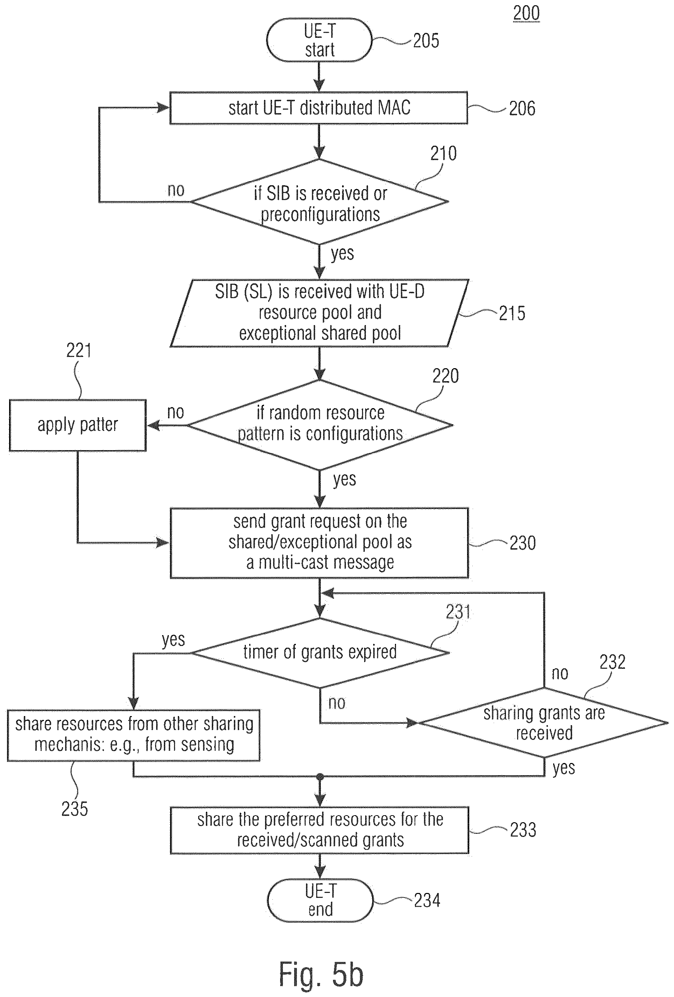

Below, the sequence of operations the taker user equipment will be discussed with respect to Fig. 5b. The method 200 starts with point 205. The resource-demanding user is performing distributed MAC scheduling and/or centralized resources allocation. However, in any case, the UE is in urgent need to use resources eventually that does not have. Here, the UE-T starts with distributed MAC as illustrated by Fig. 206.

Within the step 210, the UE scans the SIB for sharing configuration, if identified then:
- The UE scan the SI sharing command for detailed information about the sharing:
   - The donor UE resource pool information, bit-maps, start RBs, length of subchannels (cf. step 215)
   - The common search space on sidelinks (shared pools for sharing hand shaking, possibly exceptional pools with exceptional definitions).
   - To avoid interference on S-SR, a randomization of this sharing requests (pseudo random patters (PN sequences) to randomize the requests to avoid collision, also NOMA concepts may apply) (cf. step 220)
      ∘ If a PN pattern is defined or preconfigured by the network, the requesting UE sends the sharing request using the pattern.
      ∘ Otherwise, if no pattern is known by the UE, it sends the sharing request un-randomized. (cf. step 221)

Within the step 230, the grant request on the preconfigured resource for message exchange defined before is summed. After sending the grant, the requesting UE starts the timer T timer_grant response (cf. 231).

If the timer T_timer_grant_response did not expire:
- Check if grant response is received (cf. 232),
   ∘ If yes, hence use the shared resources as in the S-GR (cf. 233 and 234)
- If no grant is received, continue waiting

Otherwise, if timer expiry:
- UE-T selects another way to share resources, e.g., based on sensing (cf. 235).

With respect to Fig. 6, a mechanism for power control will be discussed.

Power of requesting message: based on the discovery mechanism, transmission the requests from taker UEs might be selected from multiple power levels. If discovery information is not available, the maximum power level should be selected in this case. The UE may stick the power levels (2 (4 levels) or 3 (8-levels) bits) identifying the power control value to the donor UEs. This value can be used to decide on the Thr of the received S-SR.

Power of the message response: If the donor UE is receiving a requesting for sharing message, and if the power level can be decoded then the donor sends the grant response using the same power value or higher. If the donor UE is not able to decode the power control, the maximum power will be used to send the grant response.

Sharing the donor resource pool: Depending on the results from the threshold check in Marker (A) (Figure 4), the donor UE may prescribe the power value of sharing in the granting response message. If the results in the Marker is blow and the donor UE will use exactly the shared resources (when the taker UE is quite far) the donor UE may select one of the low power levels. Otherwise, if the results of the Marker is that the power exceeds the threshold, the donor UE may not reuse the resources (the taker UE is close enough to the donor UE) and higher power level may be suggested for the taker UE.

According to embodiments, it is suggested that the UE-D announce or inform the BS of the donated resources. If the donor UE receives a specific S-SR, the donor UE shall inform the BS with the possible activity on the donated resources. This information may be provided using a specific control channel or a conventional data channel.

According to further embodiments, the BS shall deactivate the sharing mechanism on some resources (selected resources) or all resources if traffic is high or sharing resources regularities is not assured. According to further embodiments, the UE-D may announce the selected UE 5 QI/QoS.

According to embodiments, the BS shall also indicate in the RRC message a minimum acceptable sharing 5QI/CQI. In this case, in the first mechanism (sharing requests and grants), the UE-D will accept UE-T of high or equal the minimum 5QI/CQI. In the other mechanism (grant-requests only by UE-D), only UE-T with the minimum 5QI and higher can start sharing the announced resources.

In above embodiments, the invention has been mainly discussed in connection with general mobile transceivers. Preferred applications are V2X, D2D, mMTC, URLLC, critical communication. Further applications are high traffic scenario for V2X, with some / few / single UEs requesting resources to transmit high priority data (e.g. due to unexpected breaking of preceding vehicle(s) or an accident, while other UE(s) in proximity do not (urgently) need the already granted resources.

Further embodiments refer to a mobile device, like mobile phone or a vehicle using the above described mechanism of resource sharing. According to a first embodiment, the transceiver of the device can initiate the resource sharing with a request, if the transceiver requires more resources. According to a second embodiment, the transceiver can initiate the resource sharing by offering resources, if same has an portion.

In above embodiments, the step of exchanging resource controlling information should be understood as one-way communication (e.g. if the donor UE offers resources without the need for an feedback or request) and as two-way communication (e.g. request by UE-T and offering/granting by UE-D as response to the request).

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### Abbreviations

- BS: Base Station
- CBR: Channel Busy Ratio
- D2D: Device-to-Device
- EN: Emergency Notification
- eNB: Evolved Node B (base station)
- FDM: Frequency Division Multiplexing
- LTE: Long-Term Evolution
- PC5: Interface using the Sidelink Channel for D2D communication
- PPPP: ProSe per packet priority
- PRB: Physical Resource Block
- ProSe: Proximity Services
- RA: Resource Allocation
- SCI: Sidelink Control Information
- SL: sidelink
- sTTI: Short Transmission Time Interval
- TDM: Time Division Multiplexing
- TDMA: Time Division Multiple Access
- UE: User Entity (User Terminal)
- URLLC: Ultra-Reliable Low-Latency Communication
- V2V: Vehicle-to-vehicle
- V2I: Vehicle-to-infrastructure
- V2P: Vehicle-to-pedestrian
- V2N: Vehicle-to-network
- V2X: Vehicle-to-everything, i.e., V2V, V2I, V2P, V2N

### Except if V2X specification of 3GPP

∘ Mode 3: resource provisioning via eNB. A UE is connected to an eNB supporting V2X operation and obtains its resources from the eNB.
∘ Mode 4: autonomous mode / distributed scheduling. A UE is required to detect suitable resources by itself. Currently a one-second sensing operation is needed prior to using any resources for transmission.
∘ Concept of emergency pool: there is 1 special resource pool that can be used by UEs that have no configured resources for transmission. In V2X, data and control signaling is always multiplexed in frequency, but transmitted in the same subframe.

### Reference

TS36.213 Evolved Universal Terrestrial Radio Access (E-UTRA); Physical layer procedures; V14.5.0
TS 36.331 Evolved Universal Terrestrial Radio Access (E-UTRA) - Radio Resource Control (RRC); V14.
3GPP TS 36.211 Evolved Universal Terrestrial Radio Access (E-UTRA); Physical Channels and Modulation, v 14.3.0
3GPP TS 36.212 Evolved Universal Terrestrial Radio Access (E-UTRA); Multiplexing and channel coding, v 14.3.0
3GPP TS 36.321 Evolved Universal Terrestrial Radio Access (E-UTRA); Medium Access Control (MAC) protocol specification, v 14.3.0
2017P59629 EP: Emergency Notification (URLLC) Requesting Spontaneous G Free Transmission for V2X

## Claims

1. A method for managing resources (23) within a communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23), the method comprising:
exchanging resource controlling information (S-SR and/or S-GR) between the first and the second mobile transceivers (16); and granting or offering the portion of the first resources (23) for the second transceiver as response to exchanging resource controlling information (S-SR, S-GR), wherein the first resources (23) to be granted and/or shared and/or offered are resources to be used for the communication between the base station (12) and the respective mobile transceiver (14, 16); or
exchanging resource controlling information (S-GR) regarding a physical resource block between the first and the second mobile transceivers (16) so as to offer the portion of the first resources (23) shared for the second transceiver such that same can directly use the portion.

2. The method according to claim 1, wherein the exchanging resource controlling information is initiated by the first mobile transceiver (14) using a resource offering message (S-GR); or wherein the exchanging resource controlling information is initiated by the second mobile transceiver (16) using a resource request message (S-SR).

3. The method according to claim 1 or 2, wherein exchanging resource controlling information (S-SR, S-GR) comprises the sub-step of offering the portion to the second mobile transceiver (16), wherein the offering is performed by the first mobile transceiver (14) by unicasting and/or multicasting and/or broadcasting a resource offering message (S-GR); or
wherein the step of exchanging resource controlling information (S-SR, S-GR) comprises the sub-step of requesting resources (23), wherein the requesting is performed by the second mobile transceiver (16) by unicasting and/or multicasting and/or broadcasting a resource request message (S-SR), or
wherein the step of exchanging resource controlling information (S-SR, S-GR) comprises the sub-step of requesting resources (23), wherein the requesting is performed by the second mobile transceiver (16) by unicasting and/or multicasting and/or broadcasting a resource request message (S-SR), wherein the granting is performed by the first mobile transceiver (14) by transmitting a resource grant message.

4. The method according to one of claims 1 to 3, wherein the first and the second mobile transceivers (16) perform distributed resource allocation; and/or
wherein the first resources (23) are allocated autonomously by the first and second mobile transceiver.

5. The method according to one of the claims 1-3, wherein the mobile communication system comprises a transceiver or a transceiver of a base station; or
wherein at least one mobile transceiver operates with centralized resource allocation performed by a transceiver (12); and/or
wherein the first resources (23) are allocated by a central radio resource controller or a central controller of a transceiver or of a base station; and/or
wherein the method further comprises announcing a resource block in frequency and/or in time, a frame or a sub-frame as portion; and/or
wherein the method further comprises informing the transceiver (12) regarding an announced resource block corresponding to the portion to be shared or to be shared with the second mobile transceiver (16); and/or
wherein the first mobile transceiver (14) is configured to fed back the sharing utilization and/or activity to transceiver (12) or wherein the method further comprises feeding back the sharing utilization and/or activity to transceiver (12), wherein feeding back is performed by the first mobile transceiver (14); and/or
wherein the transceiver (12) controls the resource allocation or provides the resources (23) in accordance with the announced resource block; and/or
wherein the transceiver (12) is formed by a base station which provides the resources (23) in accordance with the announced resource block.

6. The method according to one of the claims 3 to 5, wherein the step of exchanging resource controlling information (S-SR, S-GR) is performed using a direct communication and/or using a sidelink and/or by unicasting, multicasting or broadcasting; or
wherein the step of exchanging resource controlling information (S-SR, S-GR) is performed using a direct communication link between the first and the second mobile transceiver (16) and/or wherein the step of exchanging resource controlling information (S-SR, S-GR) is performed via an exceptional additional resource pool (20) or a common bandwidth part; or
wherein the transceiver (12) is informed on granting or offering the portion via a control channel, a data message or a combination of the control channel and the data message; or
wherein the step of exchanging resource controlling information (S-SR, S-GR) is performed using further common resources or using a further common resource portion of the resources.

7. The method according to one of claims 3 to 6, wherein the method further comprises the step of analyzing or sensing the power level of the received request, wherein the step of analyzing or sensing is performed by the first mobile transceiver (14), and wherein the step of granting or offering the portion is performed, if the power level is within a predefined range of thresholds if sharing is required; and/or
wherein the method further comprises the step of analyzing or sensing the power level of the received request, wherein the step of analyzing or sensing is performed by the first mobile transceiver (14), and wherein the step of granting or offering the portion is performed, if the power level is below a threshold if sharing is not required.

8. The method according to one of the previous claims, wherein the method comprises the step of sensing the power level and analyzing the traffic between the transceiver (12) and the first transceiver, wherein the step of sensing the power level and analyzing the traffic is performed by the second transceiver; or
wherein the method comprises the step of sensing the power level and analyzing the traffic between the transceiver (12) and the first transceiver, wherein the step of sensing the power level and analyzing the traffic is performed by the second transceiver to find a potential donor.

9. The method according to one of the previous claims, wherein the method comprises the step of performing a prioritization between the second mobile transceiver (16) and a third mobile transceiver requiring more resources, wherein the step of performing the prioritization is performed by the first mobile transceiver (14); and/or
wherein the method comprises the step of performing a prioritization between the second mobile transceiver (16) and a third mobile transceiver requiring more resources, wherein the step of performing the prioritization is performed by the first mobile transceiver (14); and wherein the prioritization is based on a QoS level information or on an RSSI information of the second and the third mobile transceiver; and/or
wherein the method comprises the step of performing a prioritization between the second mobile transceiver (16) and a third mobile transceiver requiring more resources , wherein the step of performing the prioritization is performed by the first mobile transceiver (14); and wherein the prioritization is based on a QoS level information or on an RSSI information of the second and the third mobile transceiver, wherein a granting is denied for the mobile transceiver having a RSSI value below a threshold priority and/or wherein a mobile transceiver having a lower RSSI value when compared to another mobile transceiver is preferred and/or wherein a mobile transceiver having the highest priority is preferred, and/or wherein a mobile transceiver having a higher QoS level then the QoS level of the first mobile transceiver is preferred and/or wherein a mobile transceiver having a higher QoS level then the QoS level of another mobile transceiver is preferred; and/or
wherein the first mobile transceiver (14) grants the resources (23), if the first mobile transceiver (14) and the second mobile transceiver (16) have different QoS levels or if the second mobile transceiver (16) has a higher QoS level than the first mobile transceiver (14).

10. The method according to one of the previous claims, wherein the granted resources (23) or a granted frame of the granted resources (23) comprises a toggling sub-frame or a toggling control frame enabling to activate and/or deactivate the resource sharing; and/or
wherein the step of exchanging resource controlling information (S-SR, S-GR) comprises exchanging information regarding a QoS level information of the first and/or second mobile transceiver (16).

11. A method for offering resources (23) within a communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23), the method comprising:
exchanging resource controlling information (S-SR, S-GR) regarding a physical resource block comprising the sub-step of offering the portion to a second mobile transceiver (16), wherein the offering is performed by the first mobile transceiver (14) by unicasting and/or multicasting and/or broadcasting a resource offering message (S-GR) such that the second mobile transceiver (16) can directly use the offered portion; or
exchanging resource controlling information (S-SR, S-GR) comprising the sub-step of offering the portion to a second mobile transceiver (16), wherein the offering is performed by the first mobile transceiver (14) by unicasting and/or multicasting and/or broadcasting a resource offering message (S-GR), wherein the first resources (23) to be granted and/or shared and/or offered are resources to be used for the communication between the base station (12) and the respective mobile transceiver (14, 16); and granting the portion using a resource granting message such that the second mobile transceiver (16) can use the offered portion.

12. A method for requesting or using resources (23) within a communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23), the method comprising:
exchanging resource controlling information (S-SR, S-GR) comprising the sub-step of requesting resources (23), wherein the requesting is performed by the second mobile transceiver (16) by unicasting and/or multicasting and/or broadcasting a resource request message (S-SR) such that the first mobile transceiver (14) can grant the portion for the second mobile transceiver (16), wherein the first resources (23) to be granted and/or shared and/or offered are resources to be used for the communication between the base station (12) and the respective mobile transceiver (14, 16); or
exchanging resource controlling information (S-SR, S-GR) comprising the sub-step of requesting resources (23), wherein the requesting is performed by the second mobile transceiver (16) by unicasting and/or multicasting and/or broadcasting a resource request message (S-SR); and using the portion when the first mobile transceiver (14) has granted the portion for the second mobile transceiver (16), wherein the first resources (23) to be granted and/or shared and/or offered are resources to be used for the communication between the base station (12) and the respective mobile transceiver (14, 16); or
receiving resource controlling information (S-GR) regarding a physical resource block comprising an offering of a portion of the first resources (23) for the second transceiver such that same can directly use the portion.

13. Computer readable digital storage medium having stored thereon a computer program having a program code for performing, when running on a computer, a method according to one of the previous claims.

14. A second mobile transceiver (16) belonging to a communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23),
the second mobile transceiver (16) is configured to exchange resource controlling information (S-SR, S-GR) by requesting resources (23), using unicasting and/or multicasting and/or broadcasting a resource request message (S-SR) such that first mobile transceiver (14) can grant the portion for the first mobile transceiver (14), wherein the first resources (23) to be granted and/or shared and/or offered are resources to be used for the communication between the base station (12) and the respective mobile transceiver (14, 16); or
the second mobile transceiver (16) is configured to exchange resource controlling information (S-SR, S-GR) by requesting resources (23), using unicasting and/or multicasting and/or broadcasting a resource request message (S-SR); and to use the portion when that first mobile transceiver (14) has granted the portion for the first mobile transceiver (14), wherein the first resources (23) to be granted and/or shared and/or offered are resources to be used for the communication between the base station (12) and the respective mobile transceiver (14, 16); or
the second mobile transceiver (16) is configured to receive resource controlling information (S-GR) regarding a physical resource block comprising an offering of a portion of the first resources (23) for the second transceiver such that same can directly use the portion.

15. A first mobile transceiver (14) belonging to a communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23),
the first mobile transceiver (14) is configured to exchange resource controlling information (S-SR, S-GR) regarding a physical resource block by offering the portion to the second mobile transceiver (16), using unicasting and/or multicasting and/or broadcasting a resource offering message (S-GR) such that the second mobile transceiver (16) can directly use the offered portion, or
the first mobile transceiver (14) is configured to exchange resource controlling information (S-SR, S-GR) by offering the portion to a second mobile transceiver (16), using unicasting and/or multicasting and/or broadcasting a resource offering message (S-GR), wherein the first resources (23) to be granted and/or shared and/or offered are resources to be used for the communication between the base station (12) and the respective mobile transceiver (14, 16); and to grant the portion using a resource granting message such that the second mobile transceiver (16) can use the portion.

16. A user equipment or vehicle comprising a first or second mobile transceiver (16) according to claim 14 or claim 15.

17. A communication system (10), the communication system (10) comprises a first mobile transceiver (14) and a second mobile transceiver (16), wherein the first mobile transceiver (14) has a portion of the first resources (23) to be granted and/or shared and/or offered and wherein the second mobile transceiver (16) requires more resources (23), the communication system (10) is configured for
exchanging resource controlling information (S-SR and/or S-GR) between the first and the second mobile transceivers (16); and granting or offering the portion of the first resources (23) for the second transceiver as response to exchanging resource controlling information (S-SR, S-GR), wherein the first resources (23) to be granted and/or shared and/or offered are resources to be used for the communication between the base station (12) and the respective mobile transceiver (14, 16); or
exchanging resource controlling information (S-GR) regarding a physical resource block between the first and the second mobile transceivers (16) so as to offer the portion of the first resources (23) for the second transceiver such that same can directly use the portion.

18. A communication system (10), the communication system (10) comprises a first mobile transceiver (14) and a second mobile transceiver (16), wherein the first mobile transceiver (14) has a portion of first resources (23) to be granted and/or shared and/or offered and wherein the second mobile transceiver (16) requires more resources (23),
the communication system (10) comprises a second mobile transceiver (16) according to claim 14 and/or a first mobile transceiver (14) according to claim 15.

## Patentansprüche

1. Ein Verfahren zum Verwalten von Ressourcen (23) in einem Kommunikationssystem (10), wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind und wobei das zweite mobile Sende/Empfangsgerät (16) mehr Ressourcen (23) erfordert, wobei das Verfahren folgende Schritte aufweist:
Austauschen von Ressourcensteuerinformationen (S-SR und/oder S-GR) zwischen dem ersten und zweiten mobilen Sende/Empfangsgerät (16); und Gewähren oder Anbieten des Anteils der ersten Ressourcen (23) für das zweite Sende/Empfangsgerät als Antwort auf das Austauschen von Ressourcensteuerinformationen (S-SR, S-GR), wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
Austauschen von Ressourcensteuerinformationen (S-GR) bezüglich eines physikalischen Ressourcenblocks zwischen dem ersten und dem zweiten mobilen Sende/Empfangsgerät (16), um den Anteil der ersten Ressourcen (23) anzubieten, der für das zweite Sende/Empfangsgerät gemeinschaftlich verwendet wird, so dass dasselbe den Anteil direkt verwenden kann.

2. Das Verfahren gemäß Anspruch 1, bei dem das Austauschen von Ressourcensteuerinformationen durch das erste mobile Sende/Empfangsgerät (14) unter Verwendung einer Ressourcenanbietemitteilung (S-GR) eingeleitet wird; oder wobei das Austauschen von Ressourcensteuerinformationen durch das zweite mobile Sende/Empfangsgerät (16) unter Verwendung einer Ressourcenanforderungsmitteilung (S-SR) eingeleitet wird.

3. Das Verfahren gemäß Anspruch 1 oder 2, bei dem das Austauschen von Ressourcensteuerinformationen (S-SR, S-GR) den Teilschritt des Anbietens des Anteils an das zweite mobile Sende/Empfangsgerät (16) aufweist, wobei das Anbieten durch das erste mobile Sende/Empfangsgerät (14) durch Einzelsenden und/oder Sammelsenden und/oder Rundsenden einer Ressourcenanbietemitteilung (S-GR) durchgeführt wird; oder
wobei der Schritt des Austauschens von Ressourcensteuerinformationen (S-SR, S-GR) den Teilschritt des Anforderns von Ressourcen (23) aufweist, wobei das Anfordern durch das zweite mobile Sende/Empfangsgerät (16) durch Einzelsenden und/oder Sammelsenden und/oder Rundsenden einer Ressourcenanforderungsmitteilung (S-SR) durchgeführt wird oder
wobei der Schritt des Austauschens von Ressourcensteuerinformationen (S-SR, S-GR) den Teilschritt des Anforderns von Ressourcen (23) aufweist, wobei das Anfordern durch das zweite mobile Sende/Empfangsgerät (16) durch Einzelsenden und/oder Sammelsenden und/oder Rundsenden einer Ressourcenanforderungsmitteilung (S-SR) durchgeführt wird, wobei das Gewähren durch das erste mobile Sende/Empfangsgerät (14) durch Senden einer Ressourcengewährungsmitteilung durchgeführt wird.

4. Das Verfahren gemäß einem der Ansprüche 1 bis 3, bei dem das erste und das zweite mobile Sende/Empfangsgerät (16) eine verteilte Ressourcenzuordnung durchführen; und/oder
wobei die ersten Ressourcen (23) durch das erste und zweite mobile Sende/Empfangsgerät autonom zugeordnet werden.

5. Das Verfahren gemäß einem der Ansprüche 1-3, bei dem das mobile Kommunikationssystem ein Sende/Empfangsgerät oder ein Sende/Empfangsgerät einer Basisstation aufweist; oder
wobei zumindest ein mobiles Sende/Empfangsgerät mit einer zentralisierten Ressourcenzuordnung arbeitet, die durch ein Sende/Empfangsgerät (12) durchgeführt wird; und/oder
wobei die ersten Ressourcen (23) durch eine zentrale Funkressourcensteuerung oder eine zentrale Steuerung eines Sende/Empfangsgeräts oder einer Basisstation zugeordnet werden; und/oder
wobei das Verfahren ferner ein Ankündigen eines Ressourcenblocks in der Frequenz und/oder in der Zeit, eines Rahmens oder eines Teilrahmens als Anteil aufweist; und/oder
wobei das Verfahren ferner ein Informieren des Sende/Empfangsgeräts (12) bezüglich eines angekündigten Ressourcenblocks aufweist, der dem Anteil entspricht, der gemeinschaftlich zu verwenden ist oder mit dem zweiten mobilen Sende/Empfangsgerät (16) gemeinschaftlich zu verwenden ist; und/oder
wobei das erste mobile Sende/Empfangsgerät (14) dazu konfiguriert ist, die gemeinschaftliche Verwendung und/oder Aktivität dem Sende/Empfangsgerät (12) rückzumelden oder wobei das Verfahren ferner ein Rückmelden der gemeinschaftlichen Verwendung und/oder Aktivität an das Sende/Empfangsgerät (12) aufweist, wobei Rückmelden durch das erste mobile Sende/Empfangsgerät (14) durchgeführt wird; und/oder
wobei das Sende/Empfangsgerät (12) die Ressourcenzuordnung steuert oder die Ressourcen (23) gemäß dem angekündigten Ressourcenblock bereitstellt; und/oder
wobei das Sende/Empfangsgerät (12) durch eine Basisstation gebildet ist, die die Ressourcen (23) gemäß dem angekündigten Ressourcenblock bereitstellt.

6. Das Verfahren gemäß einem der Ansprüche 3 bis 5, bei dem der Schritt des Austauschens von Ressourcensteuerinformationen (S-SR, S-GR) unter Verwendung einer direkten Kommunikation und/oder unter Verwendung eines Sidelink und/oder durch Einzelsenden, Sammelsenden oder Rundsenden durchgeführt wird; oder
wobei der Schritt des Austauschens von Ressourcensteuerinformationen (S-SR, S-GR) unter Verwendung einer direkten Kommunikationsverbindung zwischen dem ersten und zweiten mobilen Sende/Empfangsgerät (16) durchgeführt wird und/oder wobei der Schritt des Austauschens von Ressourcensteuerinformationen (S-SR, S-GR) über einen außergewöhnlichen zusätzlichen Ressourcenpool (20) oder einen gemeinsamen Bandbreitenabschnitt durchgeführt wird; oder
wobei das Sende/Empfangsgerät (12) über das Gewähren oder Anbieten des Anteils über einen Steuerkanal, eine Datenmitteilung oder eine Kombination des Steuerkanals und der Datenmitteilung informiert wird; oder
wobei der Schritt des Austauschens von Ressourcensteuerinformationen (S-SR, S-GR) unter Verwendung weiterer gemeinsamer Ressourcen oder unter Verwendung eines weiteren gemeinsamen Ressourcenanteils der Ressourcen durchgeführt wird.

7. Das Verfahren gemäß einem der Ansprüche 3 bis 6, wobei das Verfahren ferner den Schritt des Analysierens oder Erfassens des Leistungspegels der empfangenen Anforderung aufweist, wobei der Schritt des Analysierens oder Erfassens durch das erste mobile Sende/Empfangsgerät (14) durchgeführt wird und wobei der Schritt des Gewährens oder Anbietens des Anteils durchgeführt wird, falls der Leistungspegel innerhalb eines vordefinierten Bereichs von Schwellenwerten liegt, falls eine gemeinschaftliche Verwendung erforderlich ist; und/oder
wobei das Verfahren ferner den Schritt des Analysierens oder Erfassens des Leistungspegels der empfangenen Anforderung aufweist, wobei der Schritt des Analysierens oder Erfassens durch das erste mobile Sende/Empfangsgerät (14) durchgeführt wird und wobei der Schritt des Gewährens oder Anbietens des Anteils durchgeführt wird, falls der Leistungspegel unter einem Schwellenwert liegt, falls eine gemeinschaftliche Verwendung nicht erforderlich ist.

8. Das Verfahren gemäß einem der vorhergehenden Ansprüche, wobei das Verfahren den Schritt des Erfassens des Leistungspegels und Analysieren des Verkehrs zwischen dem Sende/Empfangsgerät (12) und dem ersten Sende/Empfangsgerät aufweist, wobei der Schritt des Erfassens des Leistungspegels und des Analysierens des Verkehrs durch das zweite Sende/Empfangsgerät durchgeführt wird; oder
wobei das Verfahren den Schritt des Erfassens des Leistungspegels und des Analysierens des Verkehrs zwischen dem Sende/Empfangsgerät (12) und dem ersten Sende/Empfangsgerät aufweist, wobei der Schritt des Erfassens des Leistungspegels und des Analysierens des Verkehrs durch das zweite Sende/Empfangsgerät durchgeführt wird, um einen potenziellen Geber zu finden.

9. Das Verfahren gemäß einem der vorhergehenden Ansprüche, wobei das Verfahren den Schritt des Durchführens einer Priorisierung zwischen dem zweiten mobilen Sende/Empfangsgerät und einem dritten mobilen Sende/Empfangsgerät, das mehr Ressourcen erfordert, aufweist, wobei der Schritt des Durchführens der Priorisierung durch das erste mobile Sende/Empfangsgerät (14) durchgeführt wird; und/oder
wobei das Verfahren den Schritt des Durchführens einer Priorisierung zwischen dem zweiten mobilen Sende/Empfangsgerät (16) und einem dritten mobilen Sende/Empfangsgerät, das mehr Ressourcen erfordert, aufweist, wobei der Schritt des Durchführens der Priorisierung durch das erste mobile Sende/Empfangsgerät (14) durchgeführt wird; und wobei die Priorisierung auf einer Dienstgütepegelinformation oder einer RSSI-Information des zweiten und des dritten mobilen Sende/Empfangsgeräts basiert; und/oder
wobei das Verfahren den Schritt des Durchführens einer Priorisierung zwischen dem zweiten mobilen Sende/Empfangsgerät (16) und einem dritten mobilen Sende/Empfangsgerät, das mehr Ressourcen erfordert, aufweist, wobei der Schritt des Durchführens der Priorisierung durch das erste mobile Sende/Empfangsgerät (14) durchgeführt wird; und wobei die Priorisierung auf einer Dienstgütepegelinformation oder einer RSSI-Information des zweiten und des dritten mobilen Sende/Empfangsgeräts basiert, wobei eine Gewährung für das mobile Sende/Empfangsgerät mit einem RSSI-Wert unter einer Schwellenwertpriorität abgelehnt wird und/oder wobei ein mobiles Sende/Empfangsgerät mit einem niedrigeren RSSI-Wert im Vergleich zu einem anderen mobilen Sende/Empfangsgerät bevorzugt wird und/oder wobei ein mobiles Sende/Empfangsgerät mit der höchsten Priorität bevorzugt wird und/oder wobei ein mobiles Sende/Empfangsgerät mit einem höheren Dienstgütepegel als dem Dienstgütepegel des ersten mobilen Sende/Empfangsgeräts bevorzugt wird und/oder wobei ein mobiles Sende/Empfangsgerät mit einem höheren Dienstgütepegel als dem Dienstgütepegel eines anderen mobilen Sende/Empfangsgeräts bevorzugt wird; und/oder
wobei das erste mobile Sende/Empfangsgerät (14) die Ressourcen (23) gewährt, falls das erste mobile Sende/Empfangsgerät (14) und das zweite mobile Sende/Empfangsgerät (16) unterschiedliche Dienstgütepegel aufweisen oder falls das zweite mobile Sende/Empfangsgerät (16) einen höheren Dienstgütepegel aufweist als das erste mobile Sende/Empfangsgerät (14).

10. Das Verfahren gemäß einem der vorhergehenden Ansprüche, bei dem die gewährten Ressourcen (23) oder ein gewährter Rahmen der gewährten Ressourcen (23) einen Umschaltteilrahmen oder einen Umschaltsteuerrahmen aufweist, der es ermöglicht, das gemeinschaftliche Verwenden von Ressourcen zu aktivieren und/oder zu deaktivieren; und/oder
wobei der Schritt des Austauschens von Ressourcensteuerinformationen (S-SR, S-GR) ein Austauschen von Informationen bezüglich einer Dienstgütepegelinformation des ersten und/oder zweiten mobilen Sende/Empfangsgeräts (16) aufweist.

11. Ein Verfahren zum Anbieten von Ressourcen (23) in einem Kommunikationssystem (10), wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert, wobei das Verfahren folgende Schritte aufweist:
Austauschen von Ressourcensteuerinformationen (S-SR, S-GR) bezüglich eines physikalischen Ressourcenblocks, was den Teilschritt des Anbietens des Anteils an ein zweites mobiles Sende/Empfangsgerät (16) aufweist, wobei das Anbieten durch das erste mobile Sende/Empfangsgerät (14) durch Einzelsenden und/oder Sammelsenden und/oder Rundsenden einer Ressourcenanbietemitteilung (S-GR) durchgeführt wird, so dass das zweite mobile Sende/Empfangsgerät (16) den angebotenen Anteil direkt verwenden kann; oder
Austauschen von Ressourcensteuerinformationen (S-SR, S-GR), was den Teilschritt des Anbietens des Anteils an ein zweites mobiles Sende/Empfangsgerät (16) aufweist, wobei das Anbieten durch das erste mobile Sende/Empfangsgerät (14) durch Einzelsenden und/oder Sammelsenden und/oder Rundsenden einer Ressourcenanbietemitteilung (S-GR) durchgeführt wird, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; und Gewähren des Anteils unter Verwendung einer Ressourcengewährungsmitteilung, so dass das zweite mobile Sende/Empfangsgerät (16) den angebotenen Anteil verwenden kann.

12. Ein Verfahren zum Anfordern oder Verwenden von Ressourcen (23) in einem Kommunikationssystem (10), wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert, wobei das Verfahren folgende Schritte aufweist:
Austauschen von Ressourcensteuerinformationen (S-SR, S-GR), was den Teilschritt des Anforderns von Ressourcen (23) aufweist, wobei das Anfordern durch das zweite mobile Sende/Empfangsgerät (16) durch Einzelsenden und/oder Sammelsenden und/oder Rundsenden einer Ressourcenanforderungsmitteilung (S-SR) durchgeführt wird, so dass das erste mobile Sende/Empfangsgerät (14) den Anteil für das zweite mobile Sende/Empfangsgerät (16) gewähren kann, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
Austauschen von Ressourcensteuerinformationen (S-SR, S-GR), was den Teilschritt des Anforderns von Ressourcen (23) aufweist, wobei das Anfordern durch das zweite mobile Sende/Empfangsgerät (16) durch Einzelsenden und/oder Sammelsenden und/oder Rundsenden einer Ressourcenanforderungsmitteilung (S-SR) durchgeführt wird; und Verwenden des Anteils, wenn das erste mobile Sende/Empfangsgerät (14) den Anteil für das zweite mobile Sende/Empfangsgerät (16) gewährt hat, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
Empfangen von Ressourcensteuerinformationen (S-GR) bezüglich eines physikalischen Ressourcenblocks, was ein Anbieten eines Anteils der ersten Ressourcen (23) für das zweite Sende/Empfangsgerät aufweist, so dass dasselbe den Anteil direkt verwenden kann.

13. Computerlesbares digitales Speichermedium, auf dem ein Computerprogramm gespeichert ist, das einen Programmcode zum Durchführen eines Verfahrens gemäß einem der vorhergehenden Ansprüche aufweist, wenn dasselbe auf einem Computer läuft.

14. Ein zweites mobiles Sende/Empfangsgerät (16), das zu einem Kommunikationssystem (10) gehört, wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert,
wobei das zweite mobile Sende/Empfangsgerät (16) dazu konfiguriert ist, Ressourcensteuerinformationen (S-SR, S-GR) durch Anfordern von Ressourcen (23) unter Verwendung von Einzelsenden und/oder Sammelsenden und/oder Rundsenden einer Ressourcenanforderungsmitteilung (S-SR) auszutauschen, so dass das erste mobile Sende/Empfangsgerät (14) den Anteil für das erste mobile Sende/Empfangsgerät (14) gewähren kann, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
wobei das zweite mobile Sende/Empfangsgerät (16) dazu konfiguriert ist, Ressourcensteuerinformationen (S-SR, S-GR) durch Anfordern von Ressourcen (23) unter Verwendung von Einzelsenden und/oder Sammelsenden und/oder Rundsenden einer Ressourcenanforderungsmitteilung (S-SR) auszutauschen; und den Anteil zu verwenden, wenn dieses erste mobile Sende/Empfangsgerät (14) den Anteil für das erste mobile Sende/Empfangsgerät (14) gewährt hat, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
wobei das zweite mobile Sende/Empfangsgerät (16) dazu konfiguriert ist, Ressourcensteuerinformationen (S-GR) bezüglich eines physikalischen Ressourcenblocks zu empfangen, die ein Anbieten eines Anteils der ersten Ressourcen (23) für das zweite Sende/Empfangsgerät aufweisen, so dass dasselbe den Anteil direkt verwenden kann.

15. Ein erstes mobiles Sende/Empfangsgerät (14), das zu einem Kommunikationssystem (10) gehört, wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert,
wobei das erste mobile Sende/Empfangsgerät (14) dazu konfiguriert ist, Ressourcensteuerinformationen (S-SR, S-GR) bezüglich eines physikalischen Ressourcenblocks durch Anbieten des Anteils an das zweite Sende/Empfangsgerät (16) unter Verwendung von Einzelsenden und/oder Sammelsenden und/oder Rundsenden einer Ressourcenanbietemitteilung (S-GR) auszutauschen, so dass das zweite Sende/Empfangsgerät (16) den angebotenen Anteil direkt verwenden kann, oder
wobei das erste mobile Sende/Empfangsgerät (14) dazu konfiguriert ist, Ressourcensteuerinformationen (S-SR, S-GR) durch Anbieten des Anteils an ein zweites Sende/Empfangsgerät (16) unter Verwendung von Einzelsenden und/oder Sammelsenden und/oder Rundsenden einer Ressourcenanbietemitteilung (S-GR) auszutauschen, wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; und den Anteil unter Verwendung einer Ressourcengewährungsmitteilung zu gewähren, so dass das zweite mobile Sende/Empfangsgerät (16) den Anteil verwenden kann.

16. Eine Nutzerausrüstung oder ein Fahrzeug, das ein erstes oder zweites mobiles Sende/Empfangsgerät (16) gemäß Anspruch 14 oder Anspruch 15 aufweist.

17. Ein Kommunikationssystem (10), wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert, wobei das Kommunikationssystem konfiguriert ist zum:
Austauschen von Ressourcensteuerinformationen (S-SR und/oder S-GR) zwischen dem ersten und zweiten mobilen Sende/Empfangsgerät (16); und Gewähren oder Anbieten des Anteils der ersten Ressourcen (23) für das zweite Sende/Empfangsgerät als Antwort auf das Austauschen von Ressourcensteuerinformationen (S-SR, S-GR), wobei die ersten Ressourcen (23), die zu gewähren und/oder gemeinschaftlich zu verwenden und/oder anzubieten sind, Ressourcen sind, die für die Kommunikation zwischen der Basisstation (12) und dem jeweiligen mobilen Sende/Empfangsgerät (14, 16) zu verwenden sind; oder
Austauschen von Ressourcensteuerinformationen (S-GR) bezüglich eines physikalischen Ressourcenblocks zwischen dem ersten und dem zweiten mobilen Sende/Empfangsgerät (16), um den Anteil der ersten Ressourcen (23) für das zweite Sende/Empfangsgerät anzubieten, so dass dasselbe den Anteil direkt verwenden kann.

18. Ein Kommunikationssystem (10), wobei das Kommunikationssystem (10) ein erstes mobiles Sende/Empfangsgerät (14) und ein zweites mobiles Sende/Empfangsgerät (16) aufweist, wobei das erste mobile Sende/Empfangsgerät (14) einen Anteil von ersten Ressourcen (23) aufweist, die zu gewähren und/oder gemeinschaftlich zu verwenden und/oder anzubieten sind, und wobei das zweite mobile Sende/Empfangsgerät (16) mehr Ressourcen (23) erfordert,
wobei das Kommunikationssystem (10) ein zweites mobiles Sende/Empfangsgerät (16) gemäß Anspruch 14 und/oder ein erstes mobiles Sende/Empfangsgerät (14) gemäß Anspruch 15 aufweist.

## Revendications

1. Procédé de gestion de ressources (23) dans un système de communications (10), le système de communications (10) comprenant un premier émetteur-récepteur mobile (14) et un deuxième émetteur-récepteur mobile (16), où le premier émetteur-récepteur mobile (14) présente une partie de premières ressources (23) à attribuer et/ou à partager et/ou à offrir et où le deuxième émetteur-récepteur mobile (16) requiert plus de ressources (23), le procédé comprenant le fait de:
échanger les informations de commande de ressources (S-SR et/ou S-GR) entre le premier et le deuxième émetteur-récepteur mobile (16); et attribuer ou offrir la partie des premières ressources (23) pour le deuxième émetteur-récepteur en réponse à l'échange des informations de commande de ressources (S-SR, S-GR), où les premières ressources (23) à attribuer et/ou à partager et/ou à offrir sont des ressources à utiliser pour la communication entre la station de base (12) et l'émetteur-récepteur mobile respectif (14, 16); ou
échanger les informations de commande de ressources (S-GR) concernant un bloc de ressources physiques entre le premier et le deuxième émetteur-récepteur mobile (16) de manière à offrir la partie des premières ressources (23) partagée pour le deuxième émetteur-récepteur de sorte que ce dernier puisse utiliser directement la partie.

2. Procédé selon la revendication 1, dans lequel l'échange d'informations de commande de ressources est initié par le premier émetteur-récepteur mobile (14) à l'aide d'un message d'offre de ressources (S-GR); ou dans lequel l'échange d'informations de commande de ressources est initié par le deuxième émetteur-récepteur mobile (16) à l'aide d'un message de demande de ressources (S-SR).

3. Procédé selon la revendication 1 ou 2, dans lequel l'échange des informations de commande de ressources (S-SR, S-GR) comprend la sous-étape consistant à offrir la partie au deuxième émetteur-récepteur mobile (16), dans lequel l'offre est effectuée par le premier émetteur-récepteur mobile (14) par monodiffusion et/ou par multidiffusion et/ou par diffusion d'un message d'offre de ressources (S-GR); ou
dans lequel l'étape d'échange des informations de commande de ressources (S-SR, S-GR) comprend la sous-étape consistant à demander des ressources (23), dans lequel la demande est effectuée par le deuxième émetteur-récepteur mobile (16) par monodiffusion et/ou par multidiffusion et/ou par diffusion d'un message de demande de ressources (S-SR), ou
dans lequel l'étape d'échange des informations de commande de ressources (S-SR, S-GR) comprend la sous-étape consistant à demander des ressources (23), dans lequel la demande est effectuée par le deuxième émetteur-récepteur mobile (16) par monodiffusion et/ou par multidiffusion et/ou par diffusion d'un message de demande de ressources (S-SR), dans lequel l'attribution est effectuée par le premier émetteur-récepteur mobile (14) en transmettant un message d'attribution de ressources.

4. Procédé selon l'une des revendications 1 à 3, dans lequel le premier et le deuxième émetteur-récepteur mobile (16) effectuent une attribution de ressources distribuée; et/ou
dans lequel les premières ressources (23) sont attribuées de manière autonome par le premier et le deuxième émetteur-récepteur mobile.

5. Procédé selon l'une des revendications 1 à 3, dans lequel le système de communications mobile comprend un émetteur-récepteur ou un émetteur-récepteur d'une station de base; ou
dans lequel au moins un émetteur-récepteur mobile fonctionne avec une attribution de ressources centralisée effectuée par un émetteur-récepteur (12); et/ou
dans lequel les premières ressources (23) sont attribuées par un moyen de commande central de ressources radio ou un moyen de commande central d'un émetteur-récepteur ou d'une station de base; et/ou
dans lequel le procédé comprend par ailleurs le fait d'annoncer un bloc de ressources en fréquence et/ou dans le temps, une trame ou une sous-trame comme partie; et/ou
dans lequel le procédé comprend par ailleurs le fait d'informer l'émetteur-récepteur (12) en ce qui concerne un bloc de ressources annoncé correspondant à la partie à partager ou à partager avec le deuxième émetteur-récepteur mobile (16); et/ou
dans lequel le premier émetteur-récepteur mobile (14) est configuré pour rétro-alimenter le fait de partager l'utilisation et/ou l'activité vers l'émetteur-récepteur (12) ou dans lequel le procédé comprend par ailleurs le fait de rétro-alimenter le partage de l'utilisation et/ou de l'activité à l'émetteur-récepteur (12), dans lequel la rétro-alimentation est effectuée par le premier émetteur-récepteur mobile (14); et/ou
dans lequel l'émetteur-récepteur (12) commande l'attribution de ressources ou fournit les ressources (23) selon le bloc de ressources annoncé; et/ou
dans lequel l'émetteur-récepteur (12) est formé par une station de base qui fournit les ressources (23) selon le bloc de ressources annoncé.

6. Procédé selon l'une des revendications 3 à 5, dans lequel l'étape consistant à échanger les informations de commande de ressources (S-SR, S-GR) est effectuée à l'aide d'une communication directe et/ou à l'aide d'une liaison latérale et/ou par monodiffusion, multidiffusion ou diffusion; ou
dans lequel l'étape consistant à échanger les informations de commande de ressources (S-SR, S-GR) est effectuée à l'aide d'une liaison de communication directe entre le premier et le deuxième émetteur-récepteur mobile (16) et/ou dans lequel l'étape consistant à échanger les informations de commande de ressources (S-SR, S-GR) est réalisée par l'intermédiaire d'un groupe de ressources additionnelles exceptionnelles (20) ou d'une partie de largeur de bande commune; ou
dans lequel l'émetteur-récepteur (12) est informé de l'attribution ou de l'offre de la partie par l'intermédiaire d'un canal de commande, d'un message de données ou d'une combinaison du canal de commande et du message de données; ou
dans lequel l'étape consistant à échanger les informations de commande de ressources (S-SR, S-GR) est effectuée à l'aide d'autres ressources communes ou à l'aide d'une autre partie de ressources communes des ressources.

7. Procédé selon l'une des revendications 3 à 6, dans lequel le procédé comprend par ailleurs l'étape consistant à analyser ou à détecter le niveau de puissance de la requête reçue, dans lequel l'étape consistant à analyser ou à détecter est effectuée par le premier émetteur-récepteur mobile (14), et dans lequel l'étape consistant à attribuer ou à offrir la partie est effectuée si le niveau de puissance se situe dans une plage prédéfinie de seuils si le partage est requis; et/ou
dans lequel le procédé comprend par ailleurs l'étape consistant à analyser ou à détecter le niveau de puissance de la demande reçue, dans lequel l'étape consistant à analyser ou à détecter est effectuée par le premier émetteur-récepteur mobile (14), et dans lequel l'étape consistant à attribuer ou à offrir la partie est effectuée si le niveau de puissance est inférieur à un seuil si le partage n'est pas requis.

8. Procédé selon l'une des revendications précédentes, dans lequel le procédé comprend l'étape consistant à détecter le niveau de puissance et à analyser le trafic entre l'émetteur-récepteur (12) et le premier émetteur-récepteur, dans lequel l'étape consistant à détecter le niveau de puissance et à analyser le trafic est effectué par le deuxième émetteur-récepteur; ou
dans lequel le procédé comprend l'étape consistant à détecter le niveau de puissance et à analyser le trafic entre l'émetteur-récepteur (12) et le premier émetteur-récepteur, dans lequel l'étape consistant à détecter le niveau de puissance et à analyser le trafic est effectuée par le deuxième émetteur-récepteur pour trouver un potentiel donneur.

9. Procédé selon l'une des revendications précédentes, dans lequel le procédé comprend l'étape consistant à effectuer une priorisation entre le deuxième émetteur-récepteur mobile (16) et un troisième émetteur-récepteur mobile qui requiert plus de ressources, dans lequel l'étape consistant à effectuer la priorisation est effectuée par le premier émetteur-récepteur mobile (14); et/ou
dans lequel le procédé comprend l'étape consistant à effectuer une priorisation entre le deuxième émetteur-récepteur mobile (16) et un troisième émetteur-récepteur mobile qui requiert plus de ressources, dans lequel l'étape consistant à effectuer la priorisation est effectuée par le premier émetteur-récepteur mobile (14); et dans lequel la priorisation est basée sur une information de niveau de QoS ou sur une information de RSSI du deuxième et du troisième émetteur-récepteur mobile; et/ou
dans lequel le procédé comprend l'étape consistant à effectuer une priorisation entre le deuxième émetteur-récepteur mobile (16) et un troisième émetteur-récepteur mobile qui requiert plus de ressources, dans lequel l'étape consistant à effectuer la priorisation est effectuée par le premier émetteur-récepteur mobile (14); et dans lequel la priorisation est basée sur une information de niveau de QoS ou sur une information de RSSI du deuxième et du troisième émetteur-récepteur mobile, dans lequel une attribution est refusée pour l'émetteur-récepteur mobile présentant une valeur de RSSI inférieure à une priorité de seuil et/ou dans lequel un émetteur-récepteur mobile présentant une valeur de RSSI inférieure en comparaison avec un autre émetteur-récepteur mobile est préféré et/ou un émetteur-récepteur mobile présentant la priorité la plus élevée est préféré, et/ou un émetteur-récepteur mobile présentant un niveau de QoS supérieur au niveau de QoS du premier émetteur-récepteur mobile est préféré et/ou dans lequel un émetteur-récepteur mobile présentant un niveau de QoS supérieur au niveau de QoS d'un autre émetteur-récepteur mobile est préféré; et/ou
dans lequel le premier émetteur-récepteur mobile (14) attribue les ressources (23) si le premier émetteur-récepteur mobile (14) et le deuxième émetteur-récepteur mobile (16) présentent des niveaux de QoS différents ou si le deuxième émetteur-récepteur mobile (16) présente un niveau de QoS supérieur à celui du premier émetteur-récepteur mobile (14).

10. Procédé selon l'une des revendications précédentes, dans lequel les ressources attribuées (23) ou une trame attribuée des ressources attribuées (23) comprennent une sous-trame basculante ou une trame de commande basculante permettant d'activer et/ou de désactiver le partage de ressources; et/ou
dans lequel l'étape consistant à échanger les informations de commande de ressources (S-SR, S-GR) comprend le fait d'échanger les informations concernant une information de niveau de QoS du premier et/ou du deuxième émetteur-récepteur mobile (16).

11. Procédé pour offrir des ressources (23) dans un système de communications (10), le système de communications (10) comprenant un premier émetteur-récepteur mobile (14) et un deuxième émetteur-récepteur mobile (16), dans lequel le premier émetteur-récepteur mobile (14) présente une partie de premières ressources (23) à attribuer et/ou à partager et/ou à offrir et dans lequel le deuxième émetteur-récepteur mobile (16) requiert plus de ressources (23), le procédé comprenant le fait de:
échanger les informations de commande de ressources (S-SR, S-GR) concernant un bloc de ressources physiques comprenant la sous-étape consistant à offrir la partie à un deuxième émetteur-récepteur mobile (16), où l'offre est effectuée par le premier émetteur-récepteur mobile (14) par monodiffusion et/ou multidiffusion et/ou diffusion d'un message d'offre de ressources (S-GR) de sorte que le deuxième émetteur-récepteur mobile (16) puisse utiliser directement la partie offerte; ou
échanger les informations de commande de ressources (S-SR, S-GR) comprenant la sous-étape consistant à offrir la partie à un deuxième émetteur-récepteur mobile (16), où l'offre est effectuée par le premier émetteur-récepteur mobile (14) par monodiffusion et/ou multidiffusion et/ou diffusion d'un message d'offre de ressources (S-GR), où les premières ressources (23) à attribuer et/ou à partager et/ou à offrir sont des ressources à utiliser pour la communication entre la station de base (12) et l'émetteur-récepteur mobile respectif (14, 16); et attribuer la partie à l'aide d'un message d'attribution de ressources de sorte que le deuxième émetteur-récepteur mobile (16) puisse utiliser la partie offerte.

12. Procédé de demande ou d'utilisation de ressources (23) dans un système de communications (10), dans lequel le système de communications (10) comprend un premier émetteur-récepteur mobile (14) et un deuxième émetteur-récepteur mobile (16), dans lequel le premier émetteur-récepteur mobile (14) présente une partie de premières ressources (23) à attribuer et/ou à partager et/ou à offrir et dans lequel le deuxième émetteur-récepteur mobile (16) requiert plus de ressources (23), le procédé comprenant le fait de:
échanger les informations de commande de ressources (S-SR, S-GR) comprenant la sous-étape consistant à demander des ressources (23), où la demande est effectuée par le deuxième émetteur-récepteur mobile (16) par monodiffusion et/ou multidiffusion et/ou diffusion d'un message de demande de ressources (S-SR) de sorte que le premier émetteur-récepteur mobile (14) puisse attribuer la partie pour le deuxième émetteur-récepteur mobile (16), où les premières ressources (23) à attribuer et/ou à partager et/ou à offrir sont des ressources à utiliser pour la communication entre la station de base (12) et l'émetteur-récepteur mobile respectif (14, 16); ou
échanger les informations de commande de ressources (S-SR, S-GR) comprenant la sous-étape consistant à demander des ressources (23), où la demande est effectuée par le deuxième émetteur-récepteur mobile (16) par monodiffusion et/ou multidiffusion et/ou diffusion d'un message de demande de ressources (S-SR); et utiliser la partie lorsque le premier émetteur-récepteur mobile (14) a attribué la partie pour le deuxième émetteur-récepteur mobile (16), où les premières ressources (23) à attribuer et/ou à partager et/ou à offrir sont des ressources à utiliser pour le communication entre la station de base (12) et l'émetteur-récepteur mobile respectif (14, 16); ou
recevoir les informations de commande de ressources (S-GR) concernant un bloc de ressources physiques comprenant le fait d'offrir une partie des premières ressources (23) pour le deuxième émetteur-récepteur de sorte que ce dernier puisse utiliser directement la partie.

13. Support de mémoire numérique lisible par ordinateur présentant, y mémorisé, un programme informatique présentant un code de programme pour réaliser, lorsqu'il est exécuté sur un ordinateur, un procédé selon l'une des revendications précédentes.

14. Deuxième émetteur-récepteur mobile (16) appartenant à un système de communications (10), dans lequel le système de communications (10) comprend un premier émetteur-récepteur mobile (14) et un deuxième émetteur-récepteur mobile (16), dans lequel le premier émetteur-récepteur mobile (14) présente une partie des premières ressources (23) à attribuer et/ou à partager et/ou à offrir et dans lequel le deuxième émetteur-récepteur mobile (16) requiert plus de ressources (23),
le deuxième émetteur-récepteur mobile (16) est configuré pour échanger les informations de commande de ressources (S-SR, S-GR) en demandant des ressources (23), à l'aide de la monodiffusion et/ou de la multidiffusion et/ou de la diffusion d'un message de demande de ressources (S-SR) de sorte que le premier émetteur-récepteur mobile (14) puisse attribuer la partie pour le premier émetteur-récepteur mobile (14), où les premières ressources (23) à attribuer et/ou à partager et/ou à offrir sont des ressources à utiliser pour la communication entre le la station de base (12) et l'émetteur-récepteur mobile respectif (14, 16); ou
le deuxième émetteur-récepteur mobile (16) est configuré pour échanger les informations de commande de ressources (S-SR, S-GR) en demandant des ressources (23), à l'aide de la monodiffusion et/ou de la multidiffusion et/ou de la diffusion d'un message de demande de ressources (S-SR); et pour utiliser la partie lorsque ce premier émetteur-récepteur mobile (14) a attribué la partie pour le premier émetteur-récepteur mobile (14), dans lequel les premières ressources (23) à attribuer et/ou à partager et/ou à offrir sont des ressources à utiliser pour la communication entre la station de base (12) et l'émetteur-récepteur mobile respectif (14, 16); ou
le deuxième émetteur-récepteur mobile (16) est configuré pour recevoir les informations de commande de ressources (S-GR) concernant un bloc de ressources physiques comprenant une offre d'une partie des premières ressources (23) pour le deuxième émetteur-récepteur de sorte que ce dernier puisse utiliser directement la partie.

15. Premier émetteur-récepteur mobile (14) appartenant à un système de communications (10), dans lequel le système de communications (10) comprend un premier émetteur-récepteur mobile (14) et un deuxième émetteur-récepteur mobile (16), dans lequel le premier émetteur-récepteur mobile (14) présente une partie des premières ressources (23) à attribuer et/ou à partager et/ou à offrir et dans lequel le deuxième émetteur-récepteur mobile (16) requiert plus de ressources (23),
le premier émetteur-récepteur mobile (14) est configuré pour échanger les informations de commande de ressources (S-SR, S-GR) concernant un bloc de ressources physiques en offrant la partie au deuxième émetteur-récepteur mobile (16), à l'aide de la monodiffusion et/ou de la multidiffusion et/ou de la diffusion d'un message d'offre de ressources (S-GR) de sorte que le deuxième émetteur-récepteur mobile (16) puisse utiliser directement la partie offerte, où
le premier émetteur-récepteur mobile (14) est configuré pour échanger les informations de commande de ressources (S-SR, S-GR) en offrant la partie à un deuxième émetteur-récepteur mobile (16), à l'aide de la monodiffusion et/ou de la multidiffusion et/ou de la diffusion d'un message d'offre de ressources (S-GR), dans lequel les premières ressources (23) à attribuer et/ou à partager et/ou à offrir sont des ressources à utiliser pour la communication entre la station de base (12) et l'émetteur-récepteur mobile respectif (14, 16); et pour attribuer la partie à l'aide d'un message d'attribution de ressources de sorte que le deuxième émetteur-récepteur mobile (16) puisse utiliser la partie.

16. Equipement utilisateur ou véhicule comprenant un premier ou un deuxième émetteur-récepteur mobile (16) selon la revendication 14 ou la revendication 15.

17. Système de communications (10), dans lequel le système de communications (10) comprend un premier émetteur-récepteur mobile (14) et un deuxième émetteur-récepteur mobile (16), dans lequel le premier émetteur-récepteur mobile (14) présente une partie des premières ressources (23) à attribuer et/ou à partager et/ou à offrir et dans lequel le deuxième émetteur-récepteur mobile (16) requiert plus de ressources (23), dans lequel le système de communications (10) est configuré pour
échanger les informations de commande de ressources (S-SR et/ou S-GR) entre le premier et le deuxième émetteur-récepteur mobile (16); et attribuer ou offrir la partie des premières ressources (23) pour le deuxième émetteur-récepteur en réponse à l'échange des informations de commande de ressources (S-SR, S-GR), dans lequel les premières ressources (23) à attribuer et/ou à partager et/ou à proposer sont des ressources à utiliser pour la communication entre la station de base (12) et l'émetteur-récepteur mobile respectif (14, 16); ou
échanger les informations de commande de ressources (S-GR) concernant un bloc de ressources physiques entre le premier et le deuxième émetteur-récepteur mobile (16) de manière à offrir la partie des premières ressources (23) pour le deuxième émetteur-récepteur de sorte que ce dernier puisse utiliser directement la partie.

18. Système de communications (10), dans lequel le système de communications (10) comprend un premier émetteur-récepteur mobile (14) et un deuxième émetteur-récepteur mobile (16), dans lequel le premier émetteur-récepteur mobile (14) présente une partie de premières ressources (23) à attribuer et/ou à partager et/ou à offrir et dans lequel le deuxième émetteur-récepteur mobile (16) requiert plus de ressources (23),
le système de communications (10) comprend un deuxième émetteur-récepteur mobile (16) selon la revendication 14 et/ou un premier émetteur-récepteur mobile (14) selon la revendication 15.
